# EUROPÄISCHE PATENTSCHRIFT

(11) **EP 4 205 266 B1**
(45) Veröffentlichungstag und Bekanntmachung des Hinweises auf die Patenterteilung: **16.09.2026**
(21) Anmeldenummer: 21745236.6
(22) Anmeldetag: 13.07.2021
(51) Int. Cl.: H02K 15/02, H02K 1/16

(54) **VORRICHTUNG UND VERFAHREN ZUR HERSTELLUNG EINES STATORPAKETS**
DEVICE AND METHOD FOR PRODUCING A STATOR CORE
DISPOSITIF ET PROCÉDÉ DE FABRICATION D'UN NOYAU DE STATOR

(30) Priorität: 28.08.2020 DE 102020005297
(43) Veröffentlichungstag der Anmeldung: 05.07.2023
(73) Patentinhaber: SEW-EURODRIVE GmbH & Co. KG, 76646 Bruchsal (DE)
(72) Erfinder: BARBOSA, Marcelo Roberto, 13347-518 Salto - SP (BR); GRIMM, Andreas, 13323-301 Salto-SP (BR)
(86) Internationale Anmeldenummer: PCT/EP2021/025256
(87) Internationale Veröffentlichungsnummer: WO 2022/042878

(56) Entgegenhaltungen:
- EP-A2- 2 675 049
- WO-A1-2020/081736
- DE-A1- 10 040 978
- DE-A1- 102007 055 379
- DE-A1- 2 632 382
- US-A- 3 559 266

## Beschreibung

Die Erfindung betrifft eine Vorrichtung zur Herstellung eines Statorpakets, insbesondere für einen Elektromotor, umfassend einen Positionierer mit mindestens einer Haltevorrichtung zur Aufnahme von mehreren zu verschweißenden Statorblechen und eine Schweißstation zum Verschweißen der Statorbleche. Die Erfindung betrifft auch ein Verfahren zur Herstellung eines Statorpakets, insbesondere für einen Elektromotor, mittels einer erfindungsgemäßen Vorrichtung.

Elektrische Maschinen, insbesondere Elektromotoren, weisen Statoren auf. Ein Stator umfasst in der Regel mehrere verhältnismäßig dünne Statorbleche, welche ringförmig ausgebildet sind. Die ringförmigen Statorbleche werden in einer Axialrichtung übereinander gestapelt und zu einem Statorpaket miteinander verschweißt. Das Statorpaket ist hohlzylindrisch ausgestaltet und weist auf seiner nach innen gerichteten Oberfläche Nuten auf. In die Nuten werden Drähte zur Ausbildung von Induktionsspulen eingelegt.

Wichtig ist, dass die Statorbleche vor dem Verschweißen präzise ausgerichtet sind. Dabei ist es insbesondere erforderlich, dass die Nuten der Statorbleche in Axialrichtung fluchten, so dass das Statorpaket in Axialrichtung durchgehende Nuten für die Drähte aufweist. Ferner ist es wichtig, dass die Statorbleche vor dem Verschweißen dicht aufeinander liegen, so dass das Statorpaket in Axialrichtung keine großen Luftspalte aufweist.

Aus der EP 1 598 157 B1 ist eine Roboterarbeitszelle bekannt, welche einen Schweißroboter mit einer Schweißelektrode aufweist. Die Roboterarbeitszelle umfasst ferner einen Positionierer, welcher um eine vertikale Drehachse drehbar ist. Der Positionierer umfasst zwei Haltevorrichtungen, welche mit zu verschweißenden Werkstücken bestückbar sind. Die Haltevorrichtungen sind an gegenüberliegenden Seiten der Drehachse angeordnet. Während Werkstücke auf der einen Haltevorrichtung verschweißt werden, können gleichzeitig andere Werkstücke auf der anderen Haltevorrichtung platziert oder von der anderen Haltevorrichtung entnommen werden.

Aus der DE 21 47 281 A ist ein Verfahren zum Zusammenschweißen von Blechen zu einem Paket bekannt. Dabei werden die Bleche aneinander gelegt und an ihrer Mantelfläche miteinander verschweißt.

Aus der US 3,299,304 A1 ist ein Stator für eine elektrische Maschine bekannt, welcher eine Mehrzahl von Blechen aufweist.

Aus der DE 20 37 752 A ist eine Vorrichtung zum Stapeln von Blechen elektrischer Maschinen bekannt.

Aus der DE 100 40 978 A1 sind eine Vorrichtung und ein Verfahren zur Herstellung von Blechpaketen bekannt.

Aus der EP 2 675 049 A2 sind ein Verfahren und eine Vorrichtung zur Herstellung von laminierten Spulenkernen für elektrische Maschinen bekannt.

Aus der US 3,559,266 A ist eine Vorrichtung zur Montage von laminierten Statorpaketen bekannt.

Aus der DE 10 2007 055 379 A1 ist ein Verfahren zur Herstellung eines aus Scheiben zusammengeschweißten Rotors bekannt.

Aus der DE 26 32 382 A1 ist eine Anlage zum Stanzen von Blechen bekannt.

Aus der WO 2020/081736 A1 ist eine elektrische Maschine bekannt, welche einen Rotor und einen Stator aufweist.

Der Erfindung liegt die Aufgabe zugrunde, eine Vorrichtung sowie ein Verfahren zur Herstellung eines Statorpakets weiterzubilden.

Die Aufgabe wird durch eine Vorrichtung zur Herstellung eines Statorpakets mit den in Anspruch 1 angegebenen Merkmalen gelöst. Vorteilhafte Ausgestaltungen und Weiterbildungen sind Gegenstand der Unteransprüche. Die Aufgabe wird auch durch ein Verfahren zur Herstellung eines Statorpakets mit den in Anspruch 8 angegebenen Merkmalen gelöst. Vorteilhafte Ausgestaltungen und Weiterbildungen sind Gegenstand der Unteransprüche.

Eine erfindungsgemäße Vorrichtung zur Herstellung eines Statorpakets, insbesondere für einen Elektromotor, umfasst einen Positionierer mit mindestens einer Haltevorrichtung zur Aufnahme von mehreren zu verschweißenden Statorblechen und eine Schweißstation zum Verschweißen der Statorbleche. Die mindestens eine Haltevorrichtung weist einen Spanndorn zum Aufspannen der Statorbleche übereinander um eine Spannachse auf. Die Schweißstation weist eine Anpressvorrichtung zum Anpressen von auf dem Spanndorn aufgespannten Statorblechen in Richtung der Spannachse auf. Die Schweißstation weist auch mindestens einen Brennerkopf auf, der an einer Führung angeordnet ist, wobei der mindestens eine Brennerkopf zum Verschweißen von mittels der Anpressvorrichtung angepressten Statorblechen mittels der Führung parallel zu der Spannachse entlang der Statorbleche bewegbar ist. Miteinander verschweißte Statorbleche bilden ein Statorpaket.

Mittels der erfindungsgemäßen Vorrichtung sind Statorpakete für Elektromotoren weitgehend automatisiert herstellbar. Dabei sind die Statorbleche vor dem Verschweißen präzise ausgerichtet. Insbesondere fluchten die Nuten der Statorbleche in Axialrichtung, und das Statorpaket weist in Axialrichtung durchgehende Nuten für die Drähte zur Ausbildung von Induktionsspulen auf. Ferner liegen die Statorbleche vor dem Verschweißen dicht aufeinander, das Statorpaket weist in Axialrichtung keine großen Luftspalte auf. Statorpakete sind somit reproduzierbar mit konstanter Qualität herstellbar.

Erfindungsgemäß weist der Positionierer einen Drehtisch auf, welcher um eine in eine Vertikalrichtung verlaufende Drehachse drehbar ist. Die Vertikalrichtung verläuft rechtwinklig zu einem Boden, auf welchem die Vorrichtung, insbesondere der Drehtisch, steht. Ferner weist der Positionierer eine erste Haltevorrichtung und eine zweite Haltevorrichtung auf, welche an diametral gegenüberliegenden Seiten des Drehtischs angeordnet sind. Dabei weist die erste Haltevorrichtung einen ersten Spanndorn auf, und die zweite Haltevorrichtung weist einen zweiten Spanndorn auf.

Dadurch ist es möglich, die zu verschweißenden Statorbleche auf dem Spanndorn der ersten Haltevorrichtung aufzuspannen und gleichzeitig die auf dem Spanndorn der zweiten Haltevorrichtung aufgespannten Statorbleche zu verschweißen. Auch ist es möglich, die auf dem Spanndorn der ersten Haltevorrichtung aufgespannten Statorbleche zu verschweißen und gleichzeitig die auf dem Spanndorn der zweiten Haltevorrichtung aufgespannten, zu dem Statorpaket verschweißten, Statorbleche zu entnehmen. Dadurch wird die Herstellung des Statorpakets beschleunigt.

Erfindungsgemäß sind die erste Haltevorrichtung und die zweite Haltevorrichtung dabei um eine gemeinsame, in eine horizontale Richtung verlaufende, Schwenkachse relativ zu dem Drehtisch schwenkbar. Die horizontale Richtung verläuft dabei rechtwinklig zu der Vertikalrichtung.

Gemäß einer bevorzugten Ausgestaltung der Erfindung ist der Spanndorn der mindestens einen Haltevorrichtung um die Spannachse drehbar. Dadurch ist es möglich, durch Bewegen des Brennerkopfes entlang der Statorbleche parallel zu der Spannachse eine erste Schweißnaht zu erzeugen, anschließend den Spanndorn mit den Statorblechen zu drehen und durch erneutes Bewegen des Brennerkopfes entlang der Statorbleche parallel zu der Spannachse eine weitere Schweißnaht zu erzeugen, welche zu der ersten Schweißnaht versetzt ist. Somit sind entlang des Umfangs des Statorpakets mehrere Schweißnähte erzeugbar.

Gemäß einer vorteilhaften Ausgestaltung der Erfindung ist die mindestens eine Haltevorrichtung mit dem Spanndorn um eine in eine horizontale Richtung verlaufende Schwenkachse schwenkbar. Die horizontale Richtung verläuft rechtwinklig zu der Vertikalrichtung und parallel zu dem Boden, auf welchem die Vorrichtung steht. Durch Schwenken der Haltevorrichtung mit dem Spanndorn ist das Statorpaket einfacher zu entnehmen.

Gemäß einer bevorzugten Ausgestaltung der Erfindung schneidet die gemeinsame Schwenkachse die Drehachse.

Gemäß einer vorteilhaften Weiterbildung der Erfindung ist die Anpressvorrichtung relativ zu dem Positionierer, insbesondere mittels eines Getriebemotors, in Vertikalrichtung bewegbar.

Gemäß einer vorteilhaften Ausgestaltung der Erfindung weist die Schweißstation einen ersten Brennerkopf, der an einer ersten Führung angeordnet ist, und einen zweiten Brennerkopf, der an einer zweiten Führung angeordnet ist, auf. Dabei sind die Brennerköpfe beim Verschweißen der Statorbleche diametral gegenüberliegend bezüglich der Spannachse angeordnet und mittels der Führungen parallel zu der Spannachse entlang der Statorbleche bewegbar. Dadurch sind gleichzeitig zwei Schweißnähte entlang der Statorbleche erzeugbar.

Gemäß einer bevorzugten Ausgestaltung der Erfindung umfasst die Schweißstation eine WIG-Schweißanlage, welche eine Steuereinheit zur Regelung einer Länge eines Lichtbogens aufweist. Beim WIG (Wolfram-Inert-Gasschweißen), das auch als TIG (Tungsten Inert-Gaswelding) bezeichnet wird, brennt ein Lichtbogen zwischen einer Elektrode aus Wolfram und den Statorblechen. Aufgrund des hohen Schmelzpunktes von Wolfram schmilzt die Elektrode nicht. Um Reaktionen mit der Umgebungsluft zu verhindern wird ein inertes Schutzgas verwendet. Dadurch werden Schwankungen in der Ausführung, insbesondere der Dicke, der Schweißnähte verringert und die Qualität wird verbessert. Zur Regelung der Länge eines Lichtbogens wird eine Stärke eines durch die Elektrode fließenden Schweißstroms gemessen. Ein Abstand der Elektrode zu den Statorblechen in radialer Richtung wird derart eingestellt, dass die Stärke des Schweißstroms einen vorgegebenen Sollwert aufweist.

Es wird auch ein Verfahren zur Herstellung eines Statorpakets, insbesondere für einen Elektromotor, mittels einer erfindungsgemäßen Vorrichtung zur Herstellung eines Statorpakets vorgeschlagen.

Dabei werden mehrere zu verschweißende Statorbleche auf dem Spanndorn der mindestens einen Haltevorrichtung aufgespannt. Anschließend werden die auf dem Spanndorn aufgespannten Statorbleche von der Anpressvorrichtung in Richtung der Spannachse angepresst. Anschließend wird der mindestens eine Brennerkopf zum Verschweißen der angepressten Statorbleche mittels der Führung parallel zu der Spannachse entlang der Statorbleche bewegt, wobei eine Schweißnaht entlang der angepressten Statorbleche erzeugt wird. Anschließend wird die Anpressvorrichtung von den verschweißten Statorblechen entfernt. Die miteinander verschweißten Statorbleche bilden ein Statorpaket.

Mittels des erfindungsgemäßen Verfahrens sind Statorpakete für Elektromotoren weitgehend automatisiert herstellbar. Dabei werden die Statorbleche vor dem Verschweißen präzise ausgerichtet. Insbesondere fluchten die Nuten der Statorbleche in Axialrichtung, und das Statorpaket weist in Axialrichtung durchgehende Nuten für die Drähte zur Ausbildung von Induktionsspulen auf. Ferner liegen die Statorbleche vor dem Verschweißen dicht aufeinander, das Statorpaket weist in Axialrichtung keine großen Luftspalte auf. Statorpakete sind somit reproduzierbar mit konstanter Qualität herstellbar.

Vorzugsweise ist die Vorrichtung derart positioniert, dass die Spannachse parallel zu einer Vertikalrichtung verläuft während die auf dem Spanndorn aufgespannten Statorbleche von der Anpressvorrichtung in Richtung der Spannachse angepresst werden und/oder während die auf dem Spanndorn aufgespannten Statorbleche verschweißt werden. Die Vertikalrichtung verläuft rechtwinklig zu einem Boden, auf welchem die Vorrichtung steht.

Gemäß einer bevorzugten Ausgestaltung der Erfindung wird der mindestens eine Brennerkopf zum Erzeugen einer Schweißnaht entlang der angepressten Statorbleche mittels der Führung parallel zu der Spannachse entlang der Statorbleche bewegt. Anschließend wird der Spanndorn der mindestens einen Haltevorrichtung um die Spannachse gedreht. Anschließend wird der mindestens eine Brennerkopf zum Erzeugen einer weiteren Schweißnaht entlang der angepressten Statorbleche mittels der Führung parallel zu der Spannachse entlang der Statorbleche bewegt. Die weitere Schweißnaht ist dabei versetzt zu der ersten Schweißnaht, beziehungsweise zu der vorigen Schweißnaht. Somit sind entlang des Umfangs des Statorpakets mehrere Schweißnähte erzeugbar.

Gemäß einer vorteilhaften Weiterbildung der Erfindung werden die zu verschweißenden Statorbleche auf einem ersten Spanndorn einer ersten Haltevorrichtung aufgespannt. Anschließend wird der Drehtisch des Positionierers derart um eine Drehachse gedreht wird, dass die auf dem ersten Spanndorn aufgespannten Statorbleche dem mindestens einen Brennerkopf zugewandt sind. Dadurch ist es möglich, die zu verschweißenden Statorbleche auf dem Spanndorn der ersten Haltevorrichtung aufzuspannen und gleichzeitig die auf dem Spanndorn der zweiten Haltevorrichtung aufgespannten Statorbleche zu verschweißen. Auch ist es möglich, die auf dem Spanndorn der ersten Haltevorrichtung aufgespannten Statorbleche zu verschweißen und gleichzeitig die auf dem Spanndorn der zweiten Haltevorrichtung aufgespannten, zu dem Statorpaket verschweißten,.Statorbleche zu entnehmen. Dadurch wird die Herstellung des Statorpakets beschleunigt.

Gemäß einer vorteilhaften Ausgestaltung der Erfindung wird nach dem Verschweißen der Statorbleche die mindestens eine Haltevorrichtung mit dem Spanndorn um eine in eine horizontale Richtung verlaufende Schwenkachse geschwenkt. Anschließend werden die zu dem Statorpaket verschweißten Statorbleche von dem Spanndorn entnommen. Die horizontale Richtung verläuft rechtwinklig zu der Vertikalrichtung und parallel zu dem Boden, auf welchem die Vorrichtung steht. Durch Schwenken der Haltevorrichtung mit dem Spanndorn ist das Statorpaket einfacher zu entnehmen.

Gemäß einer vorteilhaften Weiterbildung der Erfindung wird während dem Verschweißen der Statorbleche eine Länge eines Lichtbogens von einer Steuereinheit einer WIG-Schweißanlage der Schweißstation gesteuert. Dadurch werden Schwankungen in der Ausführung, insbesondere der Dicke, der Schweißnähte verringert und die Qualität wird verbessert. Zur Regelung der Länge eines Lichtbogens wird eine Stärke eines durch die Elektrode fließenden Schweißstroms gemessen. Ein Abstand der Elektrode zu den Statorblechen in radialer Richtung wird derart eingestellt, dass die Stärke des Schweißstroms einen vorgegebenen Sollwert aufweist.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine perspektivische Darstellung einer Vorrichtung zur Herstellung eines Statorpakets,
- Figur 2:: eine Frontansicht einer Schweißstation,
- Figur 3:: eine Seitenansicht eines Positionierers und
- Figur 4:: eine Draufsicht auf ein Statorpaket.

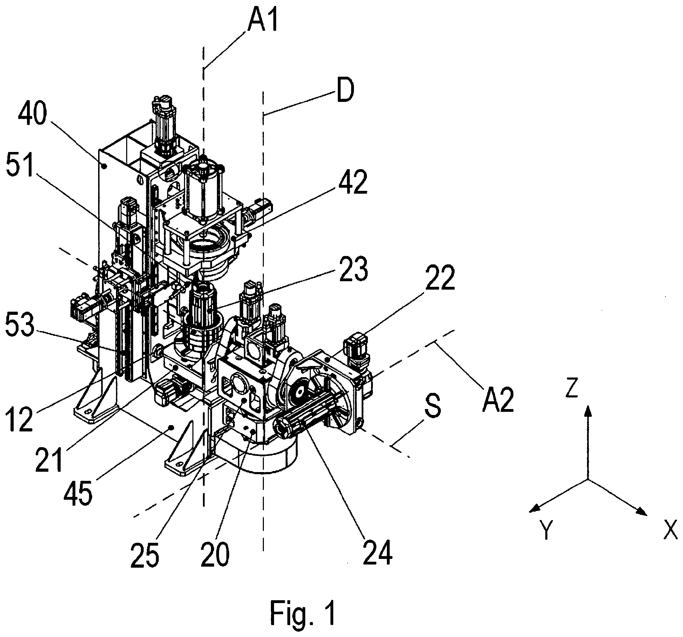

Figur 1 zeigt eine perspektivische Darstellung einer Vorrichtung zur Herstellung eines Statorpakets 10. Die Vorrichtung umfasst einen Positionierer 20 und eine Schweißstation 40. Die Schweißstation 40 weist einen Standfuß 45 auf, welcher auf einem Boden steht und mit dem Boden verbunden ist. Der Boden erstreckt sich rechtwinklig zu einer Vertikalrichtung Z. Eine Längsrichtung X erstreckt sich rechtwinklig zu der Vertikalrichtung Z. Eine Querrichtung Y erstreckt sich rechtwinklig zu der Längsrichtung X und rechtwinklig zu der Vertikalrichtung Z. Der Boden erstreckt sich somit parallel zu der Längsrichtung X und zu der Querrichtung Y.

Die Schweißstation 40 dient zum Verschweißen von Statorblechen 12 zu einem Statorpaket 10. Die Schweißstation 40 weist eine Anpressvorrichtung 42 auf, die zum Anpressen von zu verschweißenden Statorblechen 12 dient. Die Anpressvorrichtung 42 ist in Vertikalrichtung Z bewegbar.

Die Schweißstation 40 weist einen ersten Brennerkopf 51 auf, der an einer ersten Führung 53 angeordnet ist. Die Schweißstation 40 weist einen zweiten Brennerkopf 52 auf, der an einer zweiten Führung 54 angeordnet ist. Der zweite Brennerkopf 52 und die zweite Führung 54 sind in dieser Darstellung verdeckt. Mittels der Führungen 53, 54 sind die Brennerköpfe 51, 52 in Vertikalrichtung Z bewegbar.

Der Positionierer 20 weist einen Drehtisch 25 auf, welcher um eine Drehachse D drehbar ist. Die Drehachse D verläuft in Vertikalrichtung Z. Der Positionierer 20 weist eine erste Haltevorrichtung 21 und eine zweite Haltevorrichtung 22 auf. Die Haltevorrichtungen 21, 22 sind bezüglich der Drehachse D an diametral gegenüberliegenden Seiten des Drehtischs 25 angeordnet. Die Haltevorrichtungen 21, 22 dienen zur Aufnahme von mehreren zu verschweißenden Statorblechen 12.

Die erste Haltevorrichtung 21 weist einen ersten Spanndorn 23 zum Aufspannen der Statorbleche 12 übereinander um eine erste Spannachse A1 auf. Der erste Spanndorn 23 ist um die erste Spannachse A1 drehbar. Die erste Haltevorrichtung 21 ist mit dem ersten Spanndorn 23 um eine Schwenkachse S schwenkbar. Die Schwenkachse S verläuft in eine horizontale Richtung, also rechtwinklig zu der Vertikalrichtung Z.

Die zweite Haltevorrichtung 22 weist einen zweiten Spanndorn 24 zum Aufspannen der Statorbleche 12 übereinander um eine zweite Spannachse A2 auf. Der zweite Spanndorn 24 ist um die zweite Spannachse A2 drehbar. Die zweite Haltevorrichtung 22 ist mit dem zweiten Spanndorn 24 um eine Schwenkachse S schwenkbar. Die Schwenkachse S verläuft in eine horizontale Richtung, also rechtwinklig zu der Vertikalrichtung Z. Vorliegend fluchten die Schwenkachsen S, um welche die Haltevorrichtungen 21, 22 schwenkbar sind, miteinander. Die Haltevorrichtungen 21, 22 sind somit um eine gemeinsame Schwenkachse S schwenkbar.

In der hier gezeigten Darstellung ist die erste Haltevorrichtung 21 mit dem ersten Spanndorn 23 den Brennerköpfen 51, 52 der Schweißstation 40 zugewandt. Auf dem ersten Spanndorn 23 sind mehrere Statorbleche 12 aufgespannt. Die besagten Statorbleche 12 sind somit ebenfalls den Brennerköpfen 51, 52 der Schweißstation 40 zugewandt. Die erste Haltevorrichtung 21 ist derart ausgerichtet, dass die erste Spannachse A1 des ersten Spanndorns 23 in Vertikalrichtung Z verläuft. Die Schwenkachse S verläuft in Längsrichtung X. Die zweite Haltevorrichtung 22 ist, im Vergleich zu der ersten Haltevorrichtung 21, um die Schwenkachse S um 90° geschwenkt. Die zweite Spannachse A2 des zweiten Spanndorns 24 verläuft somit rechtwinklig zu der Vertikalrichtung Z, vorliegend in Querrichtung Y.

Die Anpressvorrichtung 42 ist zum Anpressen der auf dem ersten Spanndorn 23 aufgespannten Statorbleche 12 in Vertikalrichtung Z und somit in Richtung der ersten Spannachse A1 bewegbar. Die Brennerköpfe 51, 52 sind diametral gegenüberliegend bezüglich der ersten Spannachse A1 angeordnet. Mittels der Führungen 53, 54 sind die Brennerköpfe 51, 52 in Vertikalrichtung Z und somit parallel zueinander und parallel zu der ersten Spannachse A1 entlang der Statorbleche 12 bewegbar.

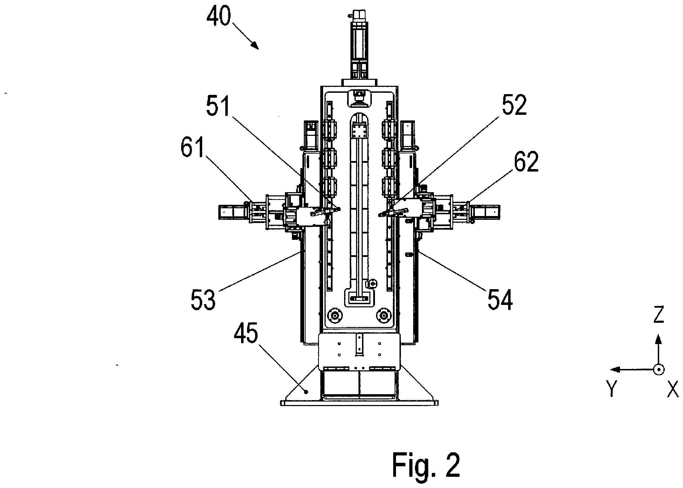

Figur 2 zeigt eine Frontansicht einer Schweißstation 40. Dabei ist die Anpressvorrichtung 42 nicht dargestellt. Die Schweißstation 40 umfasst einen ersten Getriebemotor 61 zum Antrieb des ersten Brennerkopfs 51 entlang der ersten Führung 53. Die Schweißstation 40 umfasst auch einen zweiten Getriebemotor 62 zum Antrieb des zweiten Brennerkopfs 52 entlang der zweiten Führung 54.

Ferner umfasst die Schweißstation 40 eine WIG-Schweißanlage. In den Brennerköpfen 51, 52 ist jeweils eine Elektrode aus Wolfram angeordnet. Die WIG-Schweißanlage weist eine Steuereinheit zur Regelung einer Länge eines Lichtbogens auf, welcher zwischen einer der Elektroden und den Statorblechen 12 brennt.

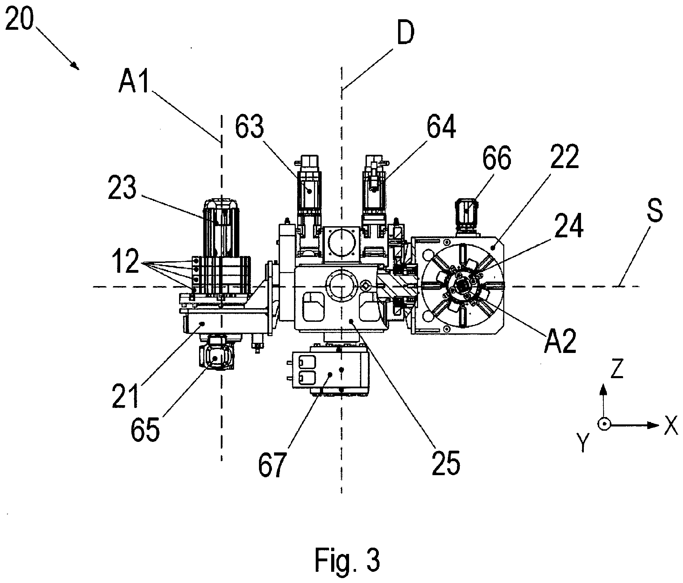

Figur 3 zeigt eine Seitenansicht eines Positionierers 20. Auf dem ersten Spanndorn 23 sind vorliegend mehrere Statorbleche 12 aufgespannt. Der zweite Spanndorn 24 ist frei von Statorblechen 12.

Der Positionierer 20 umfasst einen dritten Getriebemotor 63 zum Antrieb der ersten Haltevorrichtung 21 um die Schwenkachse S. Der Positionierer 20 umfasst einen vierten Getriebemotor 64 zum Antrieb der zweiten Haltevorrichtung 22 um die Schwenkachse S. Der Positionierer 20 umfasst einen fünften Getriebemotor 65 zum Antrieb des ersten Spanndorns 23 um die erste Spannachse A1. Der Positionierer 20 umfasst einen sechsten Getriebemotor 66 zum Antrieb des zweiten Spanndorns 24 um die zweite Spannachse A2. Der Positionierer 20 umfasst einen siebten Getriebemotor 67 zum Antrieb des Drehtisch 25 um die Drehachse D.

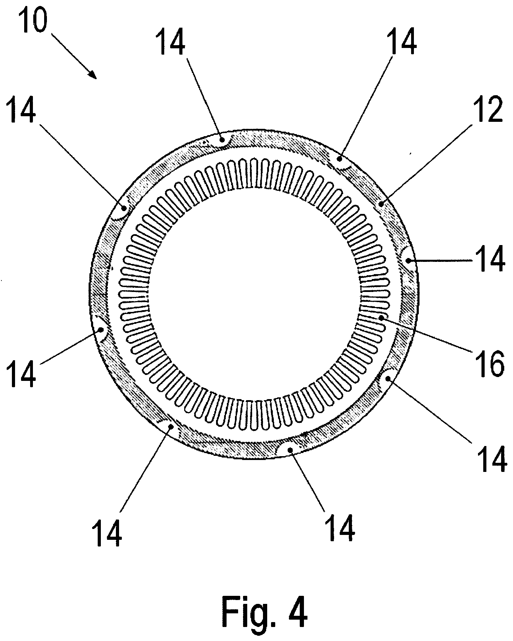

Figur 4 zeigt eine Draufsicht auf ein Statorpaket 10. Das Statorpaket 10 umfasst mehrere miteinander verschweißte ringförmige Statorbleche 12. Das Statorpaket 10 ist hohlzylindrisch ausgestaltet und weist auf seiner nach innen gerichteten Oberfläche eine Mehrzahl von Nuten 16 auf. In die Nuten 16 werden später Drähte zur Ausbildung von Induktionsspulen eingelegt.

Die Statorbleche 12 sind mittels mehrerer Schweißnähte 14 miteinander zu dem Statorpaket 10 verschweißt. Die Schweißnähte 14 sind auf einer nach außen gerichteten Oberfläche des Statorpaket 10 angeordnet. Vorliegend sind entlang eines Umfangs des Statorpakets 10 acht Schweißnähte 14 angeordnet. Zwei benachbarte Schweißnähte sind dabei um jeweils 45° zueinander versetzt.

### Bezugszeichenliste

- 10: Statorpaket
- 12: Statorblech
- 14: Schweißnaht
- 16: Nut
- 20: Positionierer
- 21: erste Haltevorrichtung
- 22: zweite Haltevorrichtung
- 23: erster Spanndorn
- 24: zweiter Spanndorn
- 25: Drehtisch
- 40: Schweißstation
- 42: Anpressvorrichtung
- 45: Standfuß
- 51: erster Brennerkopf
- 52: zweiter Brennerkopf
- 53: erste Führung
- 54: zweite Führung
- 61: erster Getriebemotor
- 62: zweiter Getriebemotor
- 63: dritter Getriebemotor
- 64: vierter Getriebemotor
- 65: fünfter Getriebemotor
- 66: sechster Getriebemotor
- 67: siebter Getriebemotor
- A1: erste Spannachse
- A2: zweite Spannachse
- D: Drehachse
- S: Schwenkachse
- X: Längsrichtung
- Y: Querrichtung
- Z: Vertikalrichtung

## Patentansprüche

1. Vorrichtung zur Herstellung eines Statorpakets (10), insbesondere für einen Elektromotor, umfassend
einen Positionierer (20) mit mindestens einer Haltevorrichtung (21, 22) zur Aufnahme von mehreren zu verschweißenden Statorblechen (12) und
eine Schweißstation (40) zum Verschweißen der Statorbleche (12),
**dadurch gekennzeichnet, dass**
die mindestens eine Haltevorrichtung (21, 22) einen Spanndorn (23, 24) zum Aufspannen der Statorbleche (12) übereinander um eine Spannachse (A1, A2) aufweist, und dass
die Schweißstation (40) eine Anpressvorrichtung (42) zum Anpressen von auf dem Spanndorn (23, 24) aufgespannten Statorblechen (12) in Richtung der Spannachse (A1, A2) aufweist, und dass
die Schweißstation (40) mindestens einen Brennerkopf (51, 52) aufweist, der an einer Führung (53, 54) angeordnet ist, und dass
der mindestens eine Brennerkopf (51, 52) zum Verschweißen von mittels der Anpressvorrichtung (42) angepressten Statorblechen (12) mittels der Führung (53, 54) parallel zu der Spannachse (A1, A2) entlang der Statorbleche (12) bewegbar ist, und dass
der Positionierer (20) einen Drehtisch (25) aufweist, welcher um eine in eine Vertikalrichtung (Z) verlaufende Drehachse (D) drehbar ist, und dass
der Positionierer (20) eine erste Haltevorrichtung (21) und eine zweite Haltevorrichtung (22) aufweist,
welche an diametral gegenüberliegenden Seiten des Drehtischs (25) angeordnet sind, und dass
die erste Haltevorrichtung (21) einen ersten Spanndorn (23) aufweist, und dass
die zweite Haltevorrichtung (22) einen zweiten Spanndorn (24) aufweist, und dass
die erste Haltevorrichtung (21) und die zweite Haltevorrichtung (22) um eine gemeinsame, in eine horizontale Richtung verlaufende, Schwenkachse (S) relativ zu dem Drehtisch (25) schwenkbar sind, wobei
die horizontale Richtung rechtwinklig zu der Vertikalrichtung (Z) verläuft.

2. Vorrichtung nach Anspruch 1,
**dadurch gekennzeichnet, dass**
der Spanndorn (23, 24) der mindestens einen Haltevorrichtung (21, 22) um die Spannachse (A1, A2) drehbar ist.

3. Vorrichtung nach einem der vorangegangenen Ansprüche,
**dadurch gekennzeichnet, dass**
die mindestens eine Haltevorrichtung (21, 22) mit dem Spanndorn (23, 24) um eine in eine horizontale Richtung verlaufende Schwenkachse (S) schwenkbar ist.

4. Vorrichtung nach einem der vorangegangenen Ansprüche,
**dadurch gekennzeichnet, dass**
die gemeinsame Schwenkachse (S) die Drehachse (D) schneidet.

5. Vorrichtung nach einem der vorangegangenen Ansprüche,
**dadurch gekennzeichnet, dass**
die Anpressvorrichtung (42) relativ zu dem Positionierer (20), insbesondere mittels eines Getriebemotors, in Vertikalrichtung (Z) bewegbar ist.

6. Vorrichtung nach einem der vorangegangenen Ansprüche,
**dadurch gekennzeichnet, dass**
die Schweißstation (40) einen ersten Brennerkopf (51), der an einer ersten Führung (53) angeordnet ist, und einen zweiten Brennerkopf (52), der an einer zweiten Führung (54) angeordnet ist, aufweist, wobei
die Brennerköpfe (51, 52) beim Verschweißen der Statorbleche (12) diametral gegenüberliegend bezüglich der Spannachse (A1, A2) angeordnet und
mittels der Führungen (53, 54) parallel zu der Spannachse (A1, A2) entlang der Statorbleche (12) bewegbar sind.

7. Vorrichtung nach einem der vorangegangenen Ansprüche,
**dadurch gekennzeichnet, dass**
die Schweißstation (40) eine WIG-Schweißanlage umfasst, welche eine Steuereinheit zur Regelung einer Länge eines Lichtbogens aufweist.

8. Verfahren zur Herstellung eines Statorpakets (10), insbesondere für einen Elektromotor, mittels einer Vorrichtung nach einem der vorangegangenen Ansprüche, wobei
mehrere zu verschweißende Statorbleche (12) auf dem Spanndorn (23, 24) der mindestens einen Haltevorrichtung (21, 22) aufgespannt werden; und anschließend
die auf dem Spanndorn (23, 24) aufgespannten Statorbleche (12) von der Anpressvorrichtung (42) in Richtung der Spannachse (A1, A2) angepresst werden; und anschließend
der mindestens eine Brennerkopf (51, 52) zum Verschweißen der angepressten Statorbleche (12) mittels der Führung (53, 54) parallel zu der Spannachse (A1, A2) entlang der Statorbleche (12) bewegt wird; und anschließend
die Anpressvorrichtung (42) von den verschweißten Statorblechen (12) entfernt wird.

9. Verfahren nach Anspruch 8, wobei
die Spannachse (A1, A2) parallel zu einer Vertikalrichtung (Z) verläuft
während die auf dem Spanndorn (23, 24) aufgespannten Statorbleche (12) von der Anpressvorrichtung (42) in Richtung der Spannachse (A1, A2) angepresst werden und/oder während die auf dem Spanndorn (23, 24) aufgespannten Statorbleche (12) verschweißt werden.

10. Verfahren nach einem der Ansprüche 8 bis 9, wobei
der mindestens eine Brennerkopf (51, 52) zum Erzeugen einer Schweißnaht (14) entlang der angepressten Statorbleche (12) mittels der Führung (53, 54) parallel zu der Spannachse (A1, A2) entlang der Statorbleche (12) bewegt wird; und anschließend
der Spanndorn (23, 24) der mindestens einen Haltevorrichtung (21, 22) um die Spannachse (A1, A2) gedreht wird; und anschließend
der mindestens eine Brennerkopf (51, 52) zum Erzeugen einer weiteren Schweißnaht (14) entlang der angepressten Statorbleche (12) mittels der Führung (53, 54) parallel zu der Spannachse (A1, A2) entlang der Statorbleche (12) bewegt wird.

11. Verfahren nach einem der Ansprüche 8 bis 10, wobei
die zu verschweißenden Statorbleche (12) auf einem ersten Spanndorn (23) einer ersten Haltevorrichtung (21) aufgespannt werden; und anschließend
der Drehtisch (25) des Positionierers (20) derart um eine Drehachse (D) gedreht wird, dass die auf dem ersten Spanndorn (23) aufgespannten Statorbleche (12) dem mindestens einen Brennerkopf (51, 52) zugewandt sind.

12. Verfahren nach einem der Ansprüche 8 bis 11, wobei
nach dem Verschweißen der Statorbleche (12) die mindestens eine Haltevorrichtung (21, 22) mit dem Spanndorn (23, 24) um eine in eine horizontale Richtung verlaufende Schwenkachse (S) geschwenkt wird; und anschließend
die verschweißten Statorbleche (12) von dem Spanndorn (23, 24) entnommen werden.

13. Verfahren nach einem der Ansprüche 8 bis 12, wobei
während dem Verschweißen der Statorbleche (12) eine Länge eines Lichtbogens von einer Steuereinheit einer WIG-Schweißanlage der Schweißstation (40) gesteuert wird.

## Claims

1. Device for producing a stator core (10), in particular for an electric motor, comprising a positioner (20) having at least one holding device (21, 22) for receiving a plurality of stator laminations (12) that are to be welded, and
a welding station (40) for welding the stator laminations (12),
**characterised in that**
the at least one holding device (21, 22) has a mandrel (23, 24) for mounting the stator laminations (12) one on top of the other around a mounting axis (A1, A2), and **in that** the welding station (40) has a pressing device (42) for pressing stator laminations (12), which are mounted on the mandrel (23, 24), in the direction of the mounting axis (A1, A2), and **in that**
the welding station (40) has at least one torch tip (51, 52) arranged on a guide (53, 54), and **in that**
the at least one torch tip (51, 52) is movable along the stator laminations (12) in parallel with the mounting axis (A1, A2) by means of the guide (53, 54) in order to weld stator laminations (12) being pressed by means of the pressing device (42), and **in that**
the positioner (20) has a rotary table (25) which is rotatable about an axis of rotation (D) extending in a vertical direction (Z), and **in that**
the positioner (20) has a first holding device (21) and a second holding device (22) which are arranged on diametrically opposite sides of the rotary table (25), and **in that**
the first holding device (21) has a first mandrel (23), and **in that**
the second holding device (22) has a second mandrel (24), and **in that**
the first holding device (21) and the second holding device (22) are pivotable relative to the rotary table (25) about a common pivot axis (S) extending in a horizontal direction,
the horizontal direction extending perpendicularly to the vertical direction (Z).

2. Device according to claim 1,
**characterised in that**
the mandrel (23, 24) of the at least one holding device (21, 22) is rotatable about the mounting axis (A1, A2).

3. Device according to any of the preceding claims,
**characterised in that**
the at least one holding device (21, 22) having the mandrel (23, 24) is pivotable about a pivot axis (S) extending in a horizontal direction.

4. Device according to any of the preceding claims,
**characterised in that**
the common pivot axis (S) intersects the axis of rotation (D).

5. Device according to any of the preceding claims,
**characterised in that**
the pressing device (42) is movable in the vertical direction (Z) relative to the positioner (20), in particular by means of a gear motor.

6. Device according to any of the preceding claims,
**characterised in that**
the welding station (40) has a first torch tip (51) which is arranged on a first guide (53), and a second torch tip (52) which is arranged on a second guide (54),
wherein, while the stator laminations (12) are being welded, the torch tips (51, 52) are arranged diametrically opposite each other in relation to the mounting axis (A1, A2) and are movable along the stator laminations (12) in parallel with the mounting axis (A1, A2) by means of the guides (53, 54).

7. Device according to any of the preceding claims,
**characterised in that**
the welding station (40) comprises a GTAW system which has a control unit for controlling a length of an arc.

8. Method for producing a stator core (10), in particular for an electric motor, by means of a device according to any of the preceding claims, wherein
a plurality of stator laminations (12) to be welded are mounted on the mandrel (23, 24) of the at least one holding device (21, 22); and then
the stator laminations (12) mounted on the mandrel (23, 24) are pressed by the pressing device (42) in the direction of the mounting axis (A1, A2); and then
the at least one torch tip (51, 52) is moved along the stator laminations (12) in parallel with the mounting axis (A1, A2) by means of the guide (53, 54) in order to weld the stator laminations (13) being pressed; and then
the pressing device (42) is removed from the welded stator laminations (12).

9. Method according to claim 8, wherein
the mounting axis (A1, A2) extends in parallel with a vertical direction (Z) while the stator laminations (12) mounted on the mandrel (23, 24) are being pressed by the pressing device (42) in the direction of the mounting axis (A1, A2) and/or while the stator laminations (12) mounted on the mandrel (23, 24) are being welded.

10. Method according to any of claims 8 to 9, wherein
the at least one torch tip (51, 52) is moved along the stator laminations (12) in parallel with the mounting axis (A1, A2) by means of the guide (53, 54) in order to generate a weld seam (14) along the stator laminations (12) being pressed; and then
the mandrel (23, 24) of the at least one holding device (21, 22) is rotated about the mounting axis (A1, A2); and then
the at least one torch tip (51, 52) is moved along the stator laminations (12) in parallel with the mounting axis (A1, A2) by means of the guide (53, 54) in order to generate a further weld seam (14) along the stator laminations (12) being pressed.

11. Method according to any of claims 8 to 10, wherein
the stator laminations (12) to be welded are mounted on a first mandrel (23) of a first holding device (21); and then
the rotary table (25) of the positioner (20) is rotated about an axis of rotation (D) such that the stator laminations (12) mounted on the first mandrel (23) face the at least one torch tip (51, 52).

12. Method according to any of claims 8 to 11, wherein
once the stator laminations (12) have been welded, the at least one holding device (21, 22) having the mandrel (23, 24) is pivoted about a pivot axis (S) extending in a horizontal direction; and then
the welded stator laminations (12) are removed from the mandrel (23, 24).

13. Method according to any of claims 8 to 12, wherein
a length of an arc is controlled by a control unit of a GTAW system of the welding station (40) while the stator laminations (12) are being welded.

## Revendications

1. Dispositif pour la fabrication d'un paquet de stator (10), en particulier pour un moteur électrique, comprenant
un positionneur (20) avec au moins un dispositif de maintien (21, 22) pour la réception de plusieurs tôles de stator (12) à souder et
une station de soudage (40) pour le soudage des tôles de stator (12),
**caractérisé en ce que**
le au moins un dispositif de maintien (21, 22) comprend un mandrin d'expansion (23, 24) pour serrer les tôles de stator (12) l'une sur l'autre autour d'un axe de serrage (A1, A2), et **en ce que**
la station de soudage (40) comprend un dispositif d'appui (42) pour appliquer les tôles de stator (12) serrées sur le mandrin d'expansion (23, 24) dans la direction de l'axe de serrage (A1, A2), et **en ce que**
la station de soudage (40) comprend au moins une tête de brûleur (51, 52), qui est disposée sur un guidage (53, 54), et **en ce que**
le au moins une tête de brûleur (51, 52) pour souder les tôles de stator (12) appliquées par le dispositif d'appui (42) est mobile au moyen du guidage (53, 54) parallèlement à l'axe de serrage (A1, A2) le long des tôles de stator (12), et **en ce que**
le positionneur (20) comprend une table rotative (25), qui est rotative autour d'un axe de rotation (D) s'étendant dans une direction verticale (Z), et **en ce que**
le positionneur (20) comprend un premier dispositif de maintien (21) et un second dispositif de maintien (22),
qui sont disposés sur des côtés diamétralement opposés de la table rotative (25), et **en ce que**
le premier dispositif de maintien (21) comprend un premier mandrin d'expansion (23), et **en ce que** le second dispositif de maintien (22) comprend un second mandrin d'expansion (24), et **en ce que** le premier dispositif de maintien (21) et le second dispositif de maintien (22) sont pivotants autour d'un axe de pivotement (S) commun s'étendant dans une direction horizontale, relativement à la table rotative (25),
où la direction horizontale s'étend perpendiculairement à la direction verticale (Z).

2. Dispositif selon la revendication 1, **caractérisé en ce que** le mandrin d'expansion (23, 24) du au moins un dispositif de maintien (21, 22) est rotatif autour de l'axe de serrage (A1, A2).

3. Dispositif selon l'une des revendications précédentes, **caractérisé en ce que** le au moins un dispositif de maintien (21, 22) avec le mandrin d'expansion (23, 24) est pivotant autour d'un axe de pivotement (S) s'étendant dans une direction horizontale.

4. Dispositif selon l'une des revendications précédentes, **caractérisé en ce que** l'axe de pivotement (S) commun coupe l'axe de rotation (D).

5. Dispositif selon l'une des revendications précédentes, **caractérisé en ce que** le dispositif d'appui (42) est mobile relativement au positionneur (20), en particulier au moyen d'un moteur à engrenages, dans la direction verticale (Z).

6. Dispositif selon l'une des revendications précédentes, **caractérisé en ce que**
la station de soudage (40) comprend une première tête de brûleur (51), qui est disposée sur un premier guidage (53), et une seconde tête de brûleur (52), qui est disposée sur un second guidage (54),
où les têtes de brûleur (51, 52) lors du soudage des tôles de stator (12) sont disposées diamétralement opposées par rapport à l'axe de serrage (A1, A2) et sont mobiles au moyen des guidages (53, 54) parallèlement à l'axe de serrage (A1, A2) le long des tôles de stator (12).

7. Dispositif selon l'une des revendications précédentes, **caractérisé en ce que** la station de soudage (40) comprend une installation de soudage TIG, laquelle comprend une unité de commande pour la régulation d'une longueur d'un arc électrique.

8. Procédé pour la fabrication d'un paquet de stator (10), en particulier pour un moteur électrique, au moyen d'un dispositif selon l'une des revendications précédentes, où
plusieurs tôles de stator (12) à souder sont serrées sur le mandrin d'expansion (23, 24) du au moins un dispositif de maintien (21, 22) ; et ensuite
les tôles de stator (12) serrées sur le mandrin d'expansion (23, 24) sont appliquées par le dispositif d'appui (42) dans la direction de l'axe de serrage (A1, A2) ; et ensuite
le au moins une tête de brûleur (51, 52) pour souder les tôles de stator (12) appliquées est déplacée au moyen du guidage (53, 54) parallèlement à l'axe de serrage (A1, A2) le long des tôles de stator (12) ; et ensuite
le dispositif d'appui (42) est retiré des tôles de stator (12) soudées.

9. Procédé selon la revendication 8, où
l'axe de serrage (A1, A2) s'étend parallèlement à une direction verticale (Z) pendant que les tôles de stator (12) serrées sur le mandrin d'expansion (23, 24) sont appliquées par le dispositif d'appui (42) dans la direction de l'axe de serrage (A1, A2) et/ou pendant que les tôles de stator (12) serrées sur le mandrin d'expansion (23, 24) sont soudées.

10. Procédé selon l'une des revendications 8 à 9, où
le au moins une tête de brûleur (51, 52) pour générer un cordon de soudure (14) le long des tôles de stator (12) appliquées est déplacée au moyen du guidage (53, 54) parallèlement à l'axe de serrage (A1, A2) le long des tôles de stator (12) ; et ensuite le mandrin d'expansion (23, 24) du au moins un dispositif de maintien (21, 22) est tourné autour de l'axe de serrage (A1, A2) ; et ensuite le au moins une tête de brûleur (51, 52) pour générer un autre cordon de soudure (14) le long des tôles de stator (12) appliquées est déplacée au moyen du guidage (53, 54) parallèlement à l'axe de serrage (A1, A2) le long des tôles de stator (12).

11. Procédé selon l'une des revendications 8 à 10, où les tôles de stator (12) à souder sont serrées sur un premier mandrin d'expansion (23) d'un premier dispositif de maintien (21) ; et ensuite la table rotative (25) du positionneur (20) est tournée autour d'un axe de rotation (D) de telle sorte que les tôles de stator (12) serrées sur le premier mandrin d'expansion (23) sont orientées vers le au moins une tête de brûleur (51, 52).

12. Procédé selon l'une des revendications 8 à 11, où après le soudage des tôles de stator (12), le au moins un dispositif de maintien (21, 22) avec le mandrin d'expansion (23, 24) est pivoté autour d'un axe de pivotement (S) s'étendant dans une direction horizontale ; et ensuite les tôles de stator (12) soudées sont retirées du mandrin d'expansion (23, 24).

13. Procédé selon l'une des revendications 8 à 12, où pendant le soudage des tôles de stator (12), une longueur d'un arc électrique est régulée par une unité de commande d'une installation de soudage TIG de la station de soudage (40).
